# EUROPÄISCHE PATENTSCHRIFT

(11) **EP 1 863 165 B1**
(45) Veröffentlichungstag und Bekanntmachung des Hinweises auf die Patenterteilung: **26.08.2009**
(21) Anmeldenummer: 07010307.2
(22) Anmeldetag: 24.05.2007
(51) Int. Cl.: H02P 9/00, H02J 7/35, G05F 1/67, H02P 7/06

(54) **Sonnenkollektoranlage mit elektromechanischer Energieumsetzung**
Solar panel facility with electromechanical energy conversion
Installation de collecteurs solaires dotée d'une conversion d'énergie électromécanique

(30) Priorität: 03.06.2006 DE 102006026073
(43) Veröffentlichungstag der Anmeldung: 05.12.2007
(73) Patentinhaber: Adensis GmbH, 01099 Dresden (DE)
(72) Erfinder: Beck, Bernhard, 97332 Volkach OT Dimbach (DE); Neussner, Thomas, Dipl.-Ing., 97509 Kolitzheim OT Zeilitzheim (DE); Wenzlik, Constantin, Dipl.-Ing., 97082 Würzburg (DE)
(74) Vertreter: Nordmann, Hardo

(56) Entgegenhaltungen:
- GB-A- 2 176 667
- US-A- 4 131 827
- US-A- 4 471 286
- US-A1- 2003 169 006
- US-A1- 2005 116 671

## Beschreibung

Die Erfindung betrifft ein Verfahren zum Betrieb einer Photovoltaik-Anlage mit einer Vielzahl von Photovoltaik-Modulen und mit einem an die Photovoltaik-Module angeschlossenen Gleichstrom-Motor, der über eine Welle mit einem Wechselstrom-Generator verbunden ist, wobei der Wechselstrom-Generator an ein Stromversorgungsnetz anschließbar ist, wobei die Regelung des Gleichstrom-Motors auf denjenigen Leistungs-Höchstwert eingestellt wird, der jeweils bei der herrschenden Temperatur und der herrschenden Sonneneinstrahlung möglich ist, und wobei die Regelung über eine Veränderung der Erregung des Gleichstrom-Motors erfolgt. Ziel dieses Verfahrens ist es, den bei einer großen Anlage vom Wechselstrom-Generator erzeugten Wechselstrom in das Stromversorgungsnetz, vorzugsweise in ein öffentliches Netz, einzuspeisen.

Die Erfindung betrifft auch eine Photovoltaik-Anlage zur Durchführung des Verfahrens.

Das oben genannte Verfahren ist beispielsweise aus der Druckschrift US 4 131 827 bekannt. Dort sind ein Verfahren und eine Vorrichtung beschrieben, bei denen die Drehzahl dahingehend geregelt wird, diese zu maximieren. Entsprechend wird eine mechanische Größe, nämlich die Drehzahl, gemessen. Dies ist begründet durch folgenden Umstand: Die Spannung der Module ist von deren Temperatur abhängig. Eine Wolkenverschattung der Photovoltaikmodule verändert die Spannung nur geringfügig, aber den Strom erheblich. Die Leistung der Module kann in kurzen Zeiträumen erheblich schwanken. Bei der US 4 131 827 wird die von der Sonne eingestrahlte Leistung bei Erhöhung zuerst zu einer Erhöhung der Drehzahl verwendet, bevor sie das Stromnetz erreicht. Die Erhöhung der Rotationsenergie und deren erst späterer Nutzen sind mit einem unerwünschten Energieverlust verbunden.

Weiterhin sind Photovoltaik-Anlagen bekannt, bei denen der von den Photovoltaik-Modulen insgesamt gelieferte Gleichstrom mittels eines elektrischen Umformers oder Wechselrichters in Wechselstrom umgewandelt wird, der dann in das Stromversorgungsnetz eingespeist wird. Zur Zeit werden auf dem Markt für Großanlagen elektrische Wechselrichter angeboten, die für eine Leistung von bis zu 700 kW ausgelegt sind, die natürlich entsprechend teuer sind. Für eine Anlage größerer Leistung müssen mehrere elektrische Wechselrichter bereitgestellt werden. Beispielsweise werden heutzutage für eine Solar-Anlage einer Leistung von 2,5 MW mindestens 9 elektrische Wechselrichter eingesetzt, von denen jeder für eine Leistung von 330 kW ausgelegt ist.

Wenngleich ein elektrischer Wechselrichter eine hohe Effizienz bei der Energieumsetzung hat, so ist doch zu verzeichnen, dass er aufgrund der in ihm enthaltenen Kondensatoren mit ziemlich großer elektrischer Kapazität relativ träge reagiert. Derzeit müssen zwischen 20 Sekunden und 3 Minuten angesetzt werden, bis ein solcher Wechselrichter an eine Änderung der momentan vorliegenden Sonnenenergie-Einstrahlung mittels seiner Regelungseinrichtung angepasst werden kann.

Die Erfindung basiert auf der Überlegung, dass insbesondere für größere Anlagen, also von 800 kW und mehr, als Umrichter die Kombination von einem einzigen Gleichstrom-Motor und von einem einzigen über eine Welle vom Gleichstrom-Motor angetriebenen Wechselstrom-Generator eingesetzt werden sollte. GleichstromMotoren und Wechselstrom-Generatoren für solch hohe Leistungen sind auf dem Markt verfügbar. Ein großer Vorteil einer solchen Kombination gegenüber einer Mehrzahl von elektrischen Wechselrichtern liegt darin, dass sie infolge der geringen Anzahl an Komponenten weniger von statistischen Ausfällen betroffen ist. Ein weiterer Vorteil liegt darin, dass weniger Wartungseinsätze erforderlich sind. Und vorteilhaft ist auch, dass im Betrieb nur eine einzige Einheit überwacht werden muss.

Aus der DE 20 2006 002 726 U ist ein Motor-Generator-Satz zum Betreiben an einer Solaranlage bekannt. Diese Schrift befasst sich jedoch lediglich mit der Mechanik des Motor-Generator-Satzes. Sie sieht auf einer Welle mehrere Polräder vor, die in jeweils einem eigenen Ständer laufen. Durch diese Maßnahme soll der Wirkungsgrad bei der Umsetzung der regenerativen Energie erhöht werden. Die Erhöhung des Wirkungsgrades bei der Energie-Umformung ist jedoch nicht das Ziel der vorliegenden Erfindung.

Aufgabe der vorliegenden Erfindung ist es vielmehr, bei einer Photovoltaik-Anlage der eingangs genannten Art möglichst verlustfrei die gerade maximal mögliche Leistung aus dem vorhandenen Satz von Photovoltaik-Modulen herauszuholen und diese maximale Leistung dem Umformer, bestehend aus Gleichstrom-Motor und angekuppeltem Wechselstrom-Generator, zuzuführen. Dies soll unabhängig von Umgebungs-Temperatur und Sonneneinstrahlung bei einem Festnetz möglich sein.

Diese Aufgabe wird bezüglich des Verfahrens erfindungsgemäß dadurch gelöst, dass der Drehstrom-Generator ein Synchrongenerator ist, dass zur Regelung die von den Photovoltaik-Modulen an den Gleichstrom-Motor abgegebene Leistung gemessen wird, und dass die Leistungsmessung wiederholt vorgenommen wird.

Hierbei kann die Leistung durch Ermittlung der am Gleichstrom-Motor anliegenden Gleichspannung und des dem Gleichstrom-Motor von den Photovoltaik-Modulen zugeführten Gleichstroms gemessen werden.

Die Ermittlung und Einstellung des Leistungs-Höchstwerts erfolgt am besten in kleinen Schritten. Gemäß einer besonders bevorzugten Ausführungsform ist demgemäß vorgesehen, dass der Leistungs-Höchstwert dadurch ermittelt wird, dass in zeitlich festgelegten Schritten der Erregerstrom incremental verändert, also z. B. stufig vergrößert oder verkleinert wird, bis die jeweilige Messung der Leistung einen Höchstwert ergibt, der als der zutreffende Leistungs-Höchstwert angesehen wird.

Nun kann sich kurz nach Ermittlung des Leistungs-Höchstwerts die Sonneneinstrahlung und/oder die Temperatur und/oder die Last leicht ändern, so dass sich ein neuer (leicht veränderter) Leistungs-Höchstwert ergibt, der eingestellt werden sollte. Der dem Leistungs-Höchstwert (MPP) entsprechende Erregerstrom-Optimalwert muss daher nachgeführt werden. Um dieses zu erreichen, ist vorgesehen, dass nach Auffinden eines zutreffenden Leistungs-Höchstwerts der dem Gleichstrom-Motor zugeführte Erregerstrom in zeitlich festgelegten Schritten incremental vergrößert und/oder verkleinert wird, so dass ein ggf. geänderter Leistungs-Höchstwert aufgefunden und eingestellt wird.

Hierbei kann das in kleinen Abschnitten vorgenommene Vergrößern und Verkleinern des Erregerstroms fortgesetzt werden, so dass sich eine Art Pendeln ergibt und ein ggf. geänderter Leistungs-Höchstwert nachfolgend ebenfalls erfasst und eingestellt wird.

Dieses "Pendeln" sollte auch dann durchgeführt werden, wenn etwa eine konstante Temperatur und eine konstante Sonneneinstrahlung und ein festes Drehstromnetz vorhanden und keine größeren Änderungen zu erwarten sind. Gemäß diesem Betriebsfall ist also vorgesehen, dass der so ermittelte Leistungs-Höchstwert für eine etwa konstante Temperatur und Sonneneinstrahlung und ein festes Drehstromnetz dadurch gehalten wird, dass in zeitlich festgelegten Schritten der Erregerstrom um den dem Leistungs-Höchstwert entsprechenden Erregerstrom-Optimalwert incremental pendelt.

Jeder zeitlich festgelegte Schritt kann weniger als 1 Sekunde, bevorzugt weniger als eine halbe Sekunde, betragen.

Zur Verkürzung des Anfahrens der Photovoltaik-Anlage kann der Erregerstrom
A) von einem vorgegebenen ersten Erfahrungswert aus incremental bis zum Erregerstrom-Optimalwert erhöht oder
B) von einem vorgegebenen zweiten Erfahrungswert aus incremental bis zum Erregerstrom-Optimalwert verringert werden.

Die voranstehend genannte Aufgabe bezüglich der Anlage wird erfindungsgemäß bei einer Photovoltaik-Anlage gelöst, die gekennzeichnet ist durch
a) eine Vielzahl von Photovoltaik-Modulen,
b) einen an die Photovoltaik-Module angeschlossenen Gleichstrom-Motor, der von den Photovoltaik-Modulen mit einer Gleichspannung und einem Gleichstrom gespeist ist,
c) einen Wechselstrom-Synchrongenerator, der über eine Welle mit dem Gleichstrom-Motor verbunden und zur Zuleitung der von ihm erzeugten Wechselspannung an ein Stromversorgungsnetz anschließbar ist,
d) eine erste Regeleinheit mit zwei Eingängen, deren erster Eingang mit der am Gleichstrom-Motor anliegenden Gleichspannung beaufschlagt ist und deren Ausgangsignal eine Einflussnahme auf die Erregung des Gleichstrom-Motors durch Feldschwächung oder Feldverstärkung bewirkt, um die am Gleichstrom-Motor anliegende Gleichspannung einzustellen, und
e) eine Recheneinheit, deren Ausgangssignal an den zweiten Eingang der ersten Regeleinheit geführt ist und in der für die aktuelle Sonneneinstrahlung und die aktuelle Temperatur durch iterative Änderung dieses Ausgangssignals der maximal mögliche Leistungs-Höchstwert ermittelt wird, wobei jeweils die am Gleichstrom-Motor anliegende Gleichspannung entsprechend dem Ausgangssignal der Recheneinheit einstellbar ist.

Die Rechenanlage wird also gleichzeitig auch zur Steuerung des Verfahrens eingesetzt.

Gemäß einer Weiterbildung ist vorgesehen, dass an den ersten Eingang der Recheneinheit der aktuelle Wert der Gleichspannung der Photovoltaik-Module und an den zweiten Eingang der Recheneinheit der aktuelle Wert des Gleichstroms der Photovoltaik-Module angelegt ist. Hierbei sollte die erste Regeleinheit bevorzugt ein PI-Regler (Proportional-Integral-Regler) sein.

Relativ einfach lässt sich eine Ausführungsform realisieren, bei der der Gleichstrom-Motor ein fremderregter Gleichstrom-Motor ist, dessen Erregerstrom vom Ausgangssignal der ersten Regeleinheit beeinflusst wird. Der Ankerkreis und der Erregerkreis des Gleichstrom-Motors sind hierbei nicht miteinander verbunden, sondern nur magnetisch gekoppelt. Dadurch kann weitgehend verlustfrei die Einstellung des jeweils spezifischen Leistungs-Höchstwerts, der sich bei der momentanen Sonneneinstrahlung und der momentanen Temperatur ergibt, vorgenommen werden.

Bevorzugt wird man die Anlage so aufbauen, dass eine zweite Regeleinheit vorgesehen ist, an deren ersten Eingang das Ausgangssignal der ersten Regeleinheit gelegt ist, und an deren zweiten Eingang das von einem Erregerstrom-Messglied erfasste Erregerstromsignal gelegt ist. Auch hier sollte wieder ein Pl-Regler eingesetzt werden.

Am einfachsten lässt sich die Erregung dadurch bewerkstelligen, dass zur Lieferung des Erregerstroms ein Stromrichter vorgesehen ist, der vom Stromversorgungsnetz gespeist ist.

Die hier beschriebene Photovoltaik-Anlage hat eine lange Lebensdauer.

Als besonders vorteilhaft wird es angesehen, dass sie sich - wie Versuche ergeben haben - im Bereich weniger Sekunden jeweils auf den Punkt der maximalen Leistung (MPP) einstellt. Sie wird also bei einer Änderung von äußeren Parametern, wie Temperatur, Sonneneinstrahlung oder Nachgiebigkeit des Wechselstromnetzes, automatisch auf den neuen Punkt nachgeführt. Die eingangs geschilderten Vorteile werden beibehalten: Es wird nur eine einzige elektro-mechanische UmwandlungsEinrichtung, bestehend aus Gleichstrom-Motor, Welle und Wechselspannungs-Generator, eingesetzt, wodurch sich gegenüber einer Vielzahl von elektrischen Wechselrichtern eine Wartungskostenersparnis, aber bei sachgerechter Pflege auch eine längere Lebensdauer ergibt. Umwandlungs-Einrichtungen dieser Art sind heutzutage bis 2,5 MW erhältlich.

Ein Ausführungsbeispiel der Erfindung wird im folgenden anhand von 4 Figuren näher beschrieben. Es zeigen:
Fig. 1 den Vorlauf der maximalen Leistung MPP eines Solargenerators über der Zeit t im Zeitpunkt von 6 Uhr bis 18 Uhr eines Tages in einem Prinzipdiagramm,
Fig. 2 den typischen Strom/Spannungsverlauf I(U) einer Photovoltaik-Anlage,
Fig. 3 eine I-U-Kennlinie und
Fig. 4 eine erfindungsgemäße Photovoltaik-Anlage.

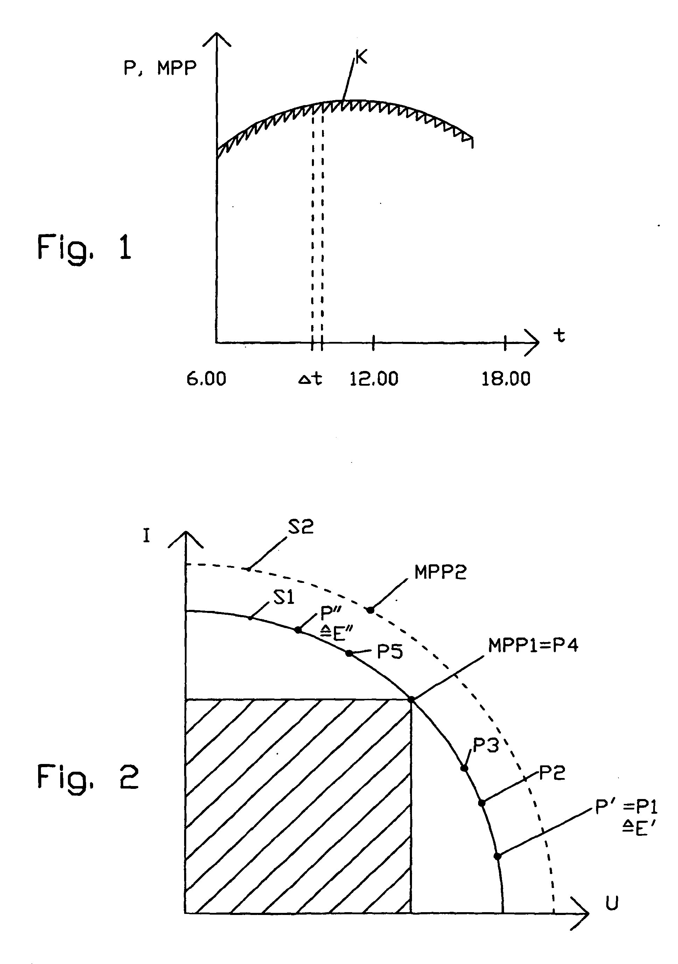

In Fig. 1 ist mit der durchgezogenen Kurve K der Verlauf der von einer Photovoltaik-Anlage maximal abgebbaren Leistung MPP (maximaler Leistungspunkt) im Laufe der Zeit t eines Tages zwischen 6 Uhr früh und 18 Uhr abends dargestellt. Es ist angenommen, dass keine Störungen durch Wolken oder durch große Temperaturänderungen eingetreten sind.

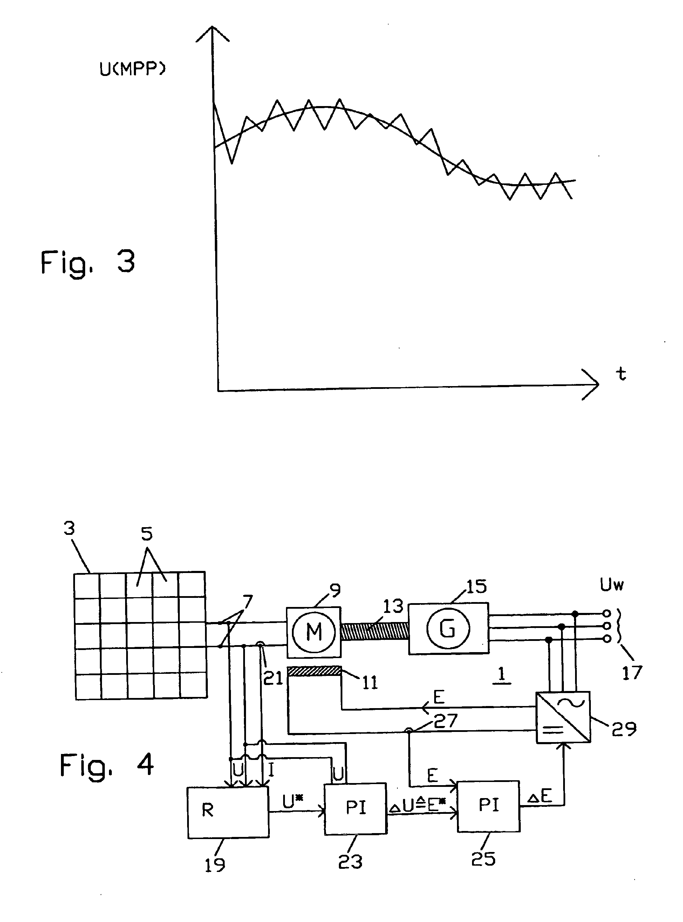

Gemäß dem hier vorliegenden Verfahren wird diese Kurve K durch Abtasten der Leistung P in regelmäßigen Zeitabständen t ermittelt, und es wird der ermittelte maximale Leistungspunkt MPP jeweils eingestellt, so dass die jeweils maximal mögliche Leistung MPP aus dem Solargenerator bezogen und an den Energieumrichter in Form eines fremderregten Gleichstrom-Motors und eines daran angekoppelten Wechselstrom-Generators (vgl. Fig. 4) zur Weiterleitung an ein Drehstromnetz abgegeben wird. Das pendelnde Abtasten mittels einer Recheneinheit und eines daran angeschlossenen PI-Reglers ist durch den zackigen Verlauf an der durchgezogenen Kurve K verdeutlicht. Allerdings muss angemerkt werden, dass die Zeitintervalle At für das Abtasten im Bereich von 1 Sekunde, bevorzugt bei einer halben Sekunde oder weniger, liegen. Daraus ergibt sich, dass das in Fig. 1 dargestellte Diagramm MPP(t) bezüglich der Tageszeiten nicht maßstabsgerecht ist.

In Fig. 2 ist mit der durchgezogenen Kurve oder Kennlinie S1 eine typische Strom/Spannungskurve I(U) einer Photovoltaik-Anlage für eine bestimmte Temperatur und eine bestimmte Sonneneinstrahlung dargestellt. Diese Kurve oder Kennlinie S1 weist einen maximalen Leistungspunkt MPP1 auf. Dieser Punkt MPP1 ist dadurch definiert, dass hier die schraffiert dargestellte Fläche eine maximale Größe, entsprechend einer maximal vom Solargenerator zur Verfügung gestellten Leistung P, besitzt.

Die Regelung des genannten elektromotorischen Umrichters erfolgt, wie im folgenden näher ausgeführt, durch eine iterative Annäherung an diesen Leistungspunkt. Dazu wird, beispielsweise beim Punkt P' oder beim Punkt P'' beginnend, mehrfach entlang der Kurve S1 vor- bzw. zurückgeregelt, bis man auf dem maximalen Leistungspunkt MPP1 angelangt ist. Die Punkte P' und P'' entsprechen dabei erfahrungsgemäßen Ausgangspunkten E' bzw. E", von denen aus der Erregerstrom E incremental erhöht bzw. erniedrigt wird.

Diese iterative Annäherung soll an einem willkürlich herausgegriffenen Beispiel verdeutlich werden.

Es wird angenommen, dass P1 (entsprechend P') der Startpunkt ist. Diesen Wert P1 ergibt also die erste Messung von I und U und die daraus resultierende Ermittlung der Leistung P, die von den Photovoltaik-Modulen an den Gleichstrom-Motor (vgl. Fig. 4) abgegeben wird. Nach einer Zeit Δt = 0,5 sec ändert die Recheneinheit (vgl. Fig. 4) über die erste Regeleinheit (vgl. Fig. 4) den Erregerstrom E um einen geringen Betrag. Damit verringert sich die Gleichspannung U. Die Recheneinheit ermittelt nun aus den neuen Werten von I und U einen Leistungswert P2. Sie stellt gleichzeitig fest, dass dieser Leistungswert P2 im Vergleich zum vorherigen Leistungswert P1 gestiegen ist.

Nach einer weiteren Zeit Δt = 0,5 sec ändert die Recheneinheit über die Regeleinheit wiederum den Erregerstrom um eine geringen Betrag. Dies geht einher mit einer weiteren Verringerung der Gleichspannung U. Die Recheneinheit ermittelt nun einen Leistungswert P3. Sie stellt wiederum fest, dass dieser Leistungswert P3 im Vergleich zum vorhergehenden Leistungswert P2 gestiegen ist.

Wiederum nach einer Zeit Δt = 0,5 sec wird der Erregerstrom entsprechend geringfügig geändert. Nun wird der weiter erhöhte Leistungswert P4 erreicht. Dies ist - das sei hier angenommen - gleichzeitig der maximale Leistungswert MPP1, was allerdings von der Recheneinheit zunächst nicht festgestellt werden kann.

Nach einer weiteren Zeit Δt = 0,5 sec erniedrigt die Recheneinheit auf dem bereits erläuterten Wege wiederum über den Erregerstrom die Spannung U. Sie misst nunmehr den Wert P5 und stellt fest, dass die Leistung von P4 nach P5 gefallen ist. Zwischen P3 und P5 muss also zu diesem Zeitpunkt irgendwo der maximale Leistungspunkt MPP1 liegen.

Die Recheneinheit erhöht nach einer weiteren Δt = 0,5 sec die Gleichspannung U, was dazu führt, dass im wieder erreichten Punkt P4 die Leistung P wieder gestiegen ist. Probehalber geht sie dann nach Verstreichen der Zeit Δt zum Punkt P3 zurück. Von dort kehrt sie jedoch wieder zum Punkt P4 zurück und testet entsprechend wieder Punkt P5.

Die Recheneinheit versucht also fortan, durch Pendeln um den Leistungs-Punkt P4, d. h. durch Erhöhen und Erniedrigen der Gleichspannung U, diesen Wert MPP1 festzuhalten.

In Fig. 3 ist eine Spannungs-Zeit-Kurve U(t) dargestellt. Die durchgezogene Kurve U(MPP) entspricht dabei der idealen Spannung im maximalen Leistungspunkt MPP. Und die gezackte Kurve entspricht der incrementalen Annäherung an diese jeweils vorherrschende ideale Spannung.

Es soll noch einmal festgehalten werden, dass in Fig. 2 die jeweilige Leistung P gekennzeichnet ist durch die die einzelnen Punkte begrenzenden Vierecke, von denen nur das zu P4 gehörende Viereck schraffiert hervorgehoben ist.

Je nach Sonneneinstrahlung und/oder Temperatur ändert sich die in Fig. 2 dargestellte Kennlinie S1 fortlaufend. Bei einer Änderung kann sich also z. B. die (gestrichelte) Kurve S2 ergeben. Dadurch ergibt sich ein neuer maximaler Leistungspunkt, beispielsweise der Wert MPP2. Die erläuterte Regelung sorgt nun dafür, dass die Gleichspannung U so eingestellt wird, dass der Solargenerator im neuen maximalen Leistungspunkt MPP 2 betrieben wird.

In Fig. 4 ist eine Photovoltaik-Anlage 1 mit einem Solargenerator 3 dargestellt, der eine Vielzahl von Photovoltaik-Modulen 5 aufweist. Jedes Modul 5 umfasst wiederum eine Vielzahl von Photovoltaik-Zellen. Die Module 5 sind in bekannter Weise zu Strängen verbunden, an deren Enden Anschlüsse 7 zum Abgriff der erzeugten Gleichspannung U und des daraus resultierenden Gleichstroms I vorgesehen sind. Je nachdem, wie viel Gleichstrom I von der an den Anschlüssen 7 angeschlossenen Last abgenommen wird, stellt sich die z. B. in den Kurven S1 und S2 der Fig. 2 entsprechende Gleichspannung U ein.

An die Anschlüsse 7 ist ein Gleichstrom-Motor 9 angeschlossen. Hierbei handelt es sich um eine fremderregte Gleichstrom-Maschine, die eine Erregerwicklung 11 aufweist. Die Welle 13 des Gleichstrom-Motors 9 treibt einen Wechselstrom-Generator 15, speziell einen Wechselstrom-Generator höherer Ausgangsspannung, an. Der Generator 15 ist zur Abgabe seiner Wechselspannung U_{w} an ein Drehstromnetz 17 angeschlossen. Dieses Drehstromnetz 17 ist hier ein öffentliches Netz von z. B. 400 Volt. Es ist also bezüglich Frequenz und Spannungshöhe konstant. Der Generator 15 läuft im Normalbetrieb mit konstanter Drehzahl. Er ist in diesem Normalbetrieb auf die Frequenz des Drehstromnetzes 17 in bekannter Weise synchronisiert.

Weiterhin ist eine Recheneinheit 19 vorgesehen. Dieser ist u. a. zur rechnerischen Ermittlung des maximalen Leistungspunkts MPP des Solargenerators 5 vorgesehen. Ihr erster Eingang ist mit der am Gleichstrom-Motor 9 anliegenden Gleichspannung U beaufschlagt. Und ihrem zweiten Eingang wird von einem Strommessglied 21 der Istwert des Gleichstroms I, der von dem Solargenerator 3 an den Gleichstrom-Motor 9 abgegeben wird, zugeführt.

Von der Recheneinheit 19 wird zur Ermittlung des maximalen Leistungspunkts MPP des Solargenerators 3 für die aktuelle Sonneneinstrahlung und die aktuelle Temperatur ein Ausgangssignal abgegeben. Dieses Ausgangssignal wird z. B. nach der Erklärung zu Fig. 2 alle 0,5 sec zur Verfügung gestellt. Das Ausgangssignal ist als neuer Sollwert U* für die Gleichspannung U zu betrachten.

Dieser Sollwert U***** wird dem zweiten Eingang einer ersten Regeleinheit 23 zugeführt, wobei der erste Eingang mit der am Gleichstrom-Motor 9 anliegenden Gleichspannung U beaufschlagt ist. Die Regeleinheit 23 ist bevorzugt ein Proportional-Integral-Regler (PI-Regler). Sein Ausgangssignal ΔU entspricht der Regelabweichung. Es wird dazu verwendet, auf die Erregung des Gleichstrom-Motors 9, speziell auf den Erregerstrom E, Einfluss zu nehmen. Das Ausgangssignal ΔU bewirkt damit, je nach Größe, eine Feldschwächung oder Feldverstärkung.

Das Ausgangssignal ΔU wird zu dieser Einflussnahme dem ersten Eingang einer zweiten Regeleinheit 25 zugeführt. Diese zweite Regeleinheit 25 ist bevorzugt ein Pl-Regler. Sie ist eine Regeleinrichtung für den Erregerstrom E. Somit kann das zugeführte Ausgangssignal ΔU als Erregerstrom-Sollwertsignal E* angesehen werden. Dem zweiten Eingang wird von einem Erregerstrom-Messglied 27 im Erregerstromkreis der Istwert E des Erregerstroms zugeleitet. Der Vergleich der beiden Signale ΔU = E* und E ergibt am Ausgang der zweiten Regeleinheit 25 ein Ausgangssignal ΔE, das die Regelabweichung repräsentiert und das direkt zur Einstellung des Erregerstroms E verwendet wird.

Der Erregerstrom E wird von einem steuerbaren Netz-Gleichrichter 29 geliefert, der eingangsseitig an das Drehstromnetz 17 angeschlossen ist. Er ist ausgangsseitig an die Erregerwicklung 11 angeschlossen. Natürlich kann auch eine andere Energiequelle eingesetzt werden. Der Netz-Gleichrichter 29 speist die Erregerwicklung 11 mit dem erforderlichen Erregerstrom E.

Es ist somit festzuhalten, dass hier der Gleichspannungsregelung für die Eingangsspannung U des Gleichstrom-Motors 9 eine Erregerstromregelung für den Erregerstrom E in der Erregerwicklung 11 untergeordnet ist.

Die Anpassung und das Aufsuchen des MPP erfolgt incremental, d. h. in kleinen Schrittänderungen des Erregerstroms E, wobei von der erwähnten Pendelung Gebrauch gemacht wird.

### Liste der Bezugszeichen

- 1: Photovoltaik-Anlage
- 3: Solargenerator
- 5: Photovoltaik-Modul
- 7: Anschluss
- 9: Gleichstrom-Motor
- 11: Erregerwicklung
- 13: Welle
- 15: Drehstrom-Generator
- 17: Drehstromnetz, Stromversorgungsnetz
- 19: Recheneinheit
- 21: Strommessglied
- 23: erste Regeleinheit
- 25: zweite Regeleinheit
- 27: Erregerstrom-Messglied
- 29: Netzstromrichter

- K: Kurve
- t: Zeit;
- Δt: Zeitintervall; zeitlich festgelegter Schritt
- S1: Kurve, Kennlinie
- S2: Kurve, Kennlinie
- P: Leistung
- E: Erregerstrom(signal)
- MPP: Leistungs-Höchstwert, max. Leistungspunkt
- U: Gleichspannung
- I: Gleichstrom
- E': erster Erfahrungswert des Erregerstroms
- E'': zweiter Erfahrungswert des Erregerstroms
- U_{w}: Wechselspannung

- ΔU: Ausgangssignal der ersten Regeleinheit 23

- ΔE: Ausgangssignal der zweiten Regeleinheit 25
- U*: Ausgangssignal der Recheneinheit 19; Sollwert der Gleichspannung U

- 18: Patentansprüche
- 4: Figuren

## Patentansprüche

1. Verfahren zum Betrieb einer Photovoltaik-Anlage (1) mit einer Vielzahl von Photovoltaik-Modulen (5) und mit einem an die Photovoltaik-Module (5) angeschlossenen Gleichstrom-Motor (9), der über eine Welle (13) mit einem Wechselstrom-Generator (15) verbunden ist, wobei der Wechselstrom-Generator (15) an ein Stromversorgungsnetz (17) anschließbar ist, wobei die Regelung des Gleichstrom-Motors (9) auf denjenigen Leistungs-Höchstwert (MPP) eingestellt wird, der jeweils bei der herrschenden Temperatur und der herrschenden Sonneneinstrahlung möglich ist, und wobei die Regelung über eine Veränderung der Erregung (E) des Gleichstrom-Motors (9) erfolgt, **dadurch gekennzeichnet, dass** der Wechselstrom-Generator (15) ein Synchrongenerator ist, dass zur Regelung die von den Photovoltaik-Modulen (5) an den Gleichstrom-Motor (9) abgegebene Leistung gemessen wird, und dass die Leistungsmessung wiederholt vorgenommen wird.

2. Verfahren nach Anspruch 1, **dadurch gekennzeichnet, dass** die Leistung (P) durch Ermittlung der am Gleichstrom-Motor (9) anliegenden Gleichspannung (U) und des dem Gleichstrom-Motor (9) von den Photovoltaik-Modulen (5) zugeführten Gleichstroms (I) gemessen wird.

3. Verfahren nach Anspruch 1 oder 2, **dadurch gekennzeichnet, dass** der Leistungs-Höchstwert (MPP) **dadurch** ermittelt wird, dass in zeitlich festgelegten Schritten (Δt) der Erregerstrom (E) incremental verändert wird, bis die jeweilige Messung der Leistung (P) einen Höchstwert ergibt, der als der zutreffende Leistungs-Höchstwert (MPP) angesehen wird.

4. Verfahren nach Anspruch 3, **dadurch gekennzeichnet, dass** nach Auffinden eines zutreffenden Leistungs-Höchstwerts (MPP1) der dem Gleichstrom-Motor (5) zugeführte Erregerstrom (E) in zeitlich festgelegten Schritten (Δt) incremental vergrößert und/oder verkleinert wird, so dass ein ggf. geänderter Leistungs-Höchstwert (MPP2) aufgefunden und eingestellt wird.

5. Verfahren nach Anspruch 3 oder 4, **dadurch gekennzeichnet, dass** der so ermittelte Leistungs-Höchstwert (MPP) für eine etwa konstante Temperatur und Sonneneinstrahlung und ein festes Drehstromnetz **dadurch** gehalten wird, dass in zeitlich festgelegten Schritten (Δt) der Erregerstrom (E) um den dem Leistungs-Höchstwert (MPP) entsprechenden Erregerstrom-Optimalwert incremental pendelt.

6. Verfahren nach Anspruch 3, 4 oder 5, **dadurch gekennzeichnet, dass** jeder zeitlich festgelegte Schritt (Δt) weniger als 1 Sekunde, bevorzugt weniger als eine halbe Sekunde, beträgt.

7. Verfahren nach einem der Ansprüche 1 bis 5, **dadurch gekennzeichnet, dass** zur Verkürzung des Anfahrens der Photovoltaik-Anlage (1) der Erregerstrom (E)
a. von einem vorgegebenen ersten Erfahrungswert (E') aus incremental bis zum Erregerstrom-Optimalwert erhöht oder
b. von einem vorgegebenen zweiten Erfahrungswert (E'') aus incremental bis zum Erregerstrom-Optimalwert verringert wird.

8. Photovoltaik-Anlage (1) zur Durchführung des Verfahrens nach einem der Ansprüche 1 bis 7, **gekennzeichnet durch**
a. eine Vielzahl von Photovoltaik-Modulen (5),
b. einen an die Photovoltaik-Module (5) angeschlossenen Gleichstrom-Motor (9), der von den Photovoltaik-Modulen (5) mit einer Gleichspannung (U) und einem Gleichstrom (I) gespeist ist,
c. einen Wechselstrom-Synchrongenerator (15), der über eine Welle (13) mit dem Gleichstrom-Motor (9) verbunden und zur Zuleitung der von ihm erzeugten Wechselspannung (U_{w}) an ein Stromversorgungsnetz (17) anschließbar ist,
d. eine erste Regeleinheit (23) mit zwei Eingängen, deren erster Eingang mit der am Gleichstrom-Motor (9) anliegenden Gleichspannung (U) beaufschlagt ist und deren Ausgangsignal (ΔU) eine Einflussnahme auf die Erregung (E) des Gleichstrom-Motors (9) **durch** Feldschwächung oder Feldverstärkung bewirkt, um die am Gleichstrom-Motor (9) anliegende Gleichspannung (U) einzustellen, und
e. eine Recheneinheit (19), deren Ausgangssignal (U*) an den zweiten Eingang der ersten Regeleinheit (23) geführt ist und in der für die aktuelle Sonneneinstrahlung und die aktuelle Temperatur **durch** iterative Änderung dieses Ausgangssignals (U*) der maximal mögliche Leistungs-Höchstwert (MPP) ermittelt wird, wobei jeweils die am Gleichstrom-Motor (9) anliegende Gleichspannung (U) entsprechend dem Ausgangssignal (U*) der Recheneinheit (19) einstellbar ist.

9. Photovoltaik-Anlage nach Anspruch 8, **dadurch gekennzeichnet, dass** an den ersten Eingang der Recheneinheit (19) der aktuelle Wert der Gleichspannung (U) der Photovoltaik-Module (5) und an den zweiten Eingang der Recheneinheit (19) der aktuelle Wert des Gleichstroms (I) der Photovoltaik-Module (5) angelegt ist.

10. Photovoltaik-Anlage nach Anspruch 8 oder 9, **dadurch gekennzeichnet, dass** die erste Regeleinheit (23) ein Pl-Regler ist.

11. Photovoltaik-Anlage nach einem der Ansprüche 8 bis 10, **dadurch gekennzeichnet, dass** der Gleichstrom-Motor (9) ein fremderregter Gleichstrom-Motor (9) ist, dessen Erregerstrom (E) vom Ausgangssignal (ΔU) der ersten Regeleinheit (23) beeinflusst wird.

12. Photovoltaik-Anlage nach Anspruch 11, **dadurch gekennzeichnet, dass** eine zweite Regeleinheit (25) vorgesehen ist, an deren ersten Eingang das Ausgangssignal (ΔU) der ersten Regeleinheit (23) gelegt ist, und an deren zweiten Eingang das von einem Erregerstrom-Messglied (27) erfasste Erregerstromsignal (E) gelegt ist.

13. Photovoltaik-Anlage nach Anspruch 12, **dadurch gekennzeichnet, dass** die zweite Regeleinheit (25) ein PI-Regler ist.

14. Photovoltaik-Anlage nach einem der Ansprüche 11 bis 13, **dadurch gekennzeichnet, dass** zur Lieferung des Erregerstroms (E) ein Stromrichter (29) vorgesehen ist, der vom Stromversorgungsnetz (17) gespeist ist.

15. Photovoltaik-Anlage nach Anspruch 14, **dadurch gekennzeichnet, dass** der Stromrichter (29) vom Ausgangssignal (ΔE) der zweiten Regeleinheit (25) gesteuert ist.

16. Photovoltaik-Anlage nach einem der Ansprüche 8 bis 15, **dadurch gekennzeichnet, dass** sie für eine Leistung von mehr als 800 kW ausgelegt ist.

17. Photovoltaik-Anlage nach einem der Ansprüche 8 bis 16, **dadurch gekennzeichnet, dass** das Stromversorgungsnetz (17) ein öffentliches Netz ist, dessen Innenwiderstand - vom Wechselstrom-Generator (15) aus gesehen - konstant ist.

18. Photovoltaik-Anlage nach einem der Ansprüche 8 bis 17, **dadurch gekennzeichnet, dass** der Wechselstrom-Synchrongenerator (15) ein Generator ist, der eine Wechselspannung (U_{w}) von 400 V abgibt.

## Claims

1. A method for operating a photovoltaic system (1) having a DC motor (9) electrically connected to a plurality of photovoltaic modules (5) and a three-phase generator (15) driven by the DC motor via a shaft (13) and electrically connected to a power mains (17), wherein the control of the DC motor (9) is adjusted to that peak power (MPP) which the plurality of photovoltaic modules (5) is capable of delivering at a current ambient temperature and a current incident solar radiation intensity, and wherein the control of the DC motor (9) is achieved via changing the excitation (E) of the DC motor (9), **characterized in that** the three-phase generator (15) is a synchronous three-phase generator, that the control comprises the measuring of the electric power supplied by the plurality of photovoltaic modules (5) to the DC motor (9), and that the measuring of the electric power is performed repeatedly.

2. The method of claim 1, **characterized in that** the supplied electric power (P) is determined by measuring a DC voltage (U) at the DC motor (9) and a DC current (I) supplied to the DC motor (9) by the plurality of the photovoltaic modules (5).

3. The method of claim 1 or 2, **characterized in that** the peak power (MPP) is determined by stepwise (Δt) changing an excitation current (E) of the DC motor (9) incrementally until the electric power (P) supplied by the plurality of photovoltaic modules (5) produces a power level which can be regarded as the peak power (MPP).

4. The method according to claim 3, **characterized by**, after determining a peak power level (MPP1), incrementing or decrementing the excitation current (E) in defined time intervals (Δt), so that a possible changed peak power level (MPP2) is found and set.

5. The method according to claim 3 or 4, **characterized by** maintaining the determined peak power (MPP) for an approximately constant ambient temperature and an approximately constant incident solar radiation intensity and a fixed power mains by causing the excitation current (E) to incrementally oscillate in defined time intervals (Δt) about an optimum excitation current (E) that produces the peak power (MPP).

6. The method according to any of claims 3 to 5, **characterized in that** each defined time interval (Δt) is less than 1 second, preferably less than 0,5 second.

7. The method of any of claims 1 to 6, **characterized in that,** to shorten the time required for starting up the photovoltaic system (1), the excitation current (E) is
a. increased incrementally from a first predetermined experimental value (E') to an optimum excitation current or
b. decreased incrementally from a second predetermined experimental value (E'') to the optimum excitation current.

8. A photovoltaic system (1) for performing the method of any of claims 1 to 7,
**characterized by**
a. a plurality of photovoltaic modules (5);
b. a DC motor (9) having an input electrically connected to the photovoltaic modules (5) and receiving from the photovoltaic modules (5) a DC voltage (U) and a DC current (I);
c. a synchronous three-phase generator (15) driven by the DC motor (9) via a shaft (13) and producing an AC output voltage capable of being supplied to a power mains (17);
d. a first control unit (23) having two inputs, wherein the first input receives the DC voltage (U) from the DC motor (9) and the output signal (Δ U) of which effects an influence on the excitation (E) of the DC motor (9) by a field decrease or a field increase for adjusting the DC voltage (U) applied to the DC motor (9); and
e. a computing unit (19) having an output producing an output signal (U*) and in which a maximum possible peak power (MPP) is computed for a current incident solar radiation intensity and a current ambient temperature by iteratively changing the output signal (U*), wherein the DC voltage (U) at the DC motor (9) is adjustable in accordance to the output signal (U*) of the computing unit (19).

9. The photovoltaic system of claim 8, **characterized in that** at the first input of the computing unit (19) the actual value of the DC voltage (U) of the photovoltaic modules (5) is applied and at the second input of the computing unit (19) the actual value of the DC current (I) produced by the photovoltaic modules (5) is applied.

10. The photovoltaic system of claim 8 or 9, **characterized in that** the first control unit (23) comprises a proportional-integral (PI) controller.

11. The photovoltaic system of any of claims 8 to 10, **characterized in that** the DC motor (9) is an externally excited DC motor (9), and wherein the output signal (ΔU) of the first control unit (23) controls the excitation current (E) of the DC motor (9).

12. The photovoltaic system of claim 11, **characterized by** an excitation current measuring unit (27) and a second control unit (25) having two inputs, wherein the output signal (ΔU) of the first control unit (23) is applied to a first input of the second control unit (25), and wherein the excitation current signal (E) measured by the excitation current measuring unit (27) is applied to the second input of the second control unit (25).

13. The photovoltaic system of claim 12, **characterized in that** the second control unit (25) comprises a proportional-integral (PI) controller.

14. The photovoltaic system of any of claims 11 to 13, further comprising a converter (29) receiving electric power from the power mains (17) for supplying the excitation current (E).

15. The photovoltaic system of claim 14, **characterized in that** the converter (29) is controlled by an output signal (ΔE) produced at the output of the second control unit (25).

16. The photovoltaic system of any of claims 8 to 15, **characterized in that** the system is designed for an output power of more than 800 kW.

17. The photovoltaic system of any of claims 8 to 16, **characterized in that** the power mains (17) is a public power grid with a constant internal resistance, as perceived from the AC generator (15).

18. The photovoltaic system of any of claim 8 to 17, **characterized in that** the synchronous three-phase generator (15) delivers an alternating voltage (Uw) of 400 V.

## Revendications

1. Procédé de mise en oeuvre d'un dispositif photovoltaïque (1) ayant une pluralité de modules photovoltaïques (5) et un moteur (9) à courant continu relié aux modules photovoltaïques (5), ledit moteur étant connecté à un générateur à courant alternatif (15) par un arbre (13), ledit générateur à courant alternatif (15) étant susceptible d'être relié à un réseau d'alimentation en courant (17), le réglage du moteur (9) à courant continu étant ajusté à une valeur maximum de puissance (MPP) tel qu'elle est possible à l'égard de la température prédominante et l'insolation prédominante, le réglage étant effectué par variation de l'excitation (E) du moteur (9) à courant continu, **caractérisé en ce que** le générateur (15) à courant alternatif est un générateur synchronique, que pour le réglage la puissance dégagée par les modules photovoltaïques (5) au moteur (9) à courant continu est mesurée, et que le mesurage de puissance est répétée.

2. Procédé selon la revendication 1, **caractérisé en ce que** la puissance (P) est mesurée par détermination de la tension continue (U) présente au moteur (9) à courant continu et du courant continu amené au moteur (9) à courant continu par les modules photovoltaïques (5).

3. Procédé selon les revendications 1 ou 2, **caractérisé en ce que** la valeur maximum de puissance (MPP) est déterminé de façon que le courant d'excitation (E) est varié en incrément en étapes temporellement fixées, jusqu'à ce que le mesurage respective de puissance (P) résulte en une valeur maximum, qui est considérée comme la valeur maximum de puissance (MPP) valable.

4. Procédé selon la revendication 3, **caractérisé en ce que** après détermination d'une valeur maximum de puissance (MPP1) applicable, le courant dégagé au moteur (9) à courant continu est augmenté ou diminué en incrément en étapes temporellement fixées, de manière qu'une valeur maximum de puissance (MPP2), le cas échéant modifiée, est trouvée et ajustée.

5. Procécé selon les revendications 3 ou 4, **caractérisé en ce que** la valeur maximum de puissance (MPP) ainsi déterminée pour une température et insolation environ constantes et un réseau fixe de courant triphasé est maintenue de telle façon que le courant d'excitation (E) oscille, en étapes (delta t) temporelles fixées, en incrément autour de la valeur optimale du courant d'excitation correspondant à la valeur maximum de puissance (MPP).

6. Procédé selon les revendications 3, 4 ou 5, **caractérisé en ce que** chaque étape temporellement fixée (delta t) s'élève à moins de 1 seconde, de préférence à moins d'une demi-seconde.

7. Procédé selon une des revendications 1 à 5, **caractérisé en ce que** pour raccourcir le démarrage du dispositif photovoltaïque (1) le courant d'excitation (E)
a. est augmenté en incrément a partir d'une première valeur d'expérienoe donnée (E') jusqu'à la valeur optimale du courant d'excitation ou
b. est diminué en incrément a partir d'une deuxième valeur d'expérience donnée (E") jusqu'à la valeur optimale du courant d'excitation.

8. Dispositif photovoltaïque (1) pour la mise en oeuvre du procédé selon une des revendications 1 à 7, **caractérisé par**
a. une pluralité de modules photovoltaïques (5),
b. un moteur à courant continu (9) relié aux modules photovoltaïques, qui est alimenté avec une tension continue (U) et un courant continu (I) par les modules photovoltaïques (5),
c. un générateur synchronique à courant alternatif (15), qui est connecté par un arbre (13) avec le moteur à courant continu (9) et susceptible d'être relié à un réseau d'alimentation en courant (17) pour amener la tension alternative (Uw) produit par lui,
d. une première unité de réglage (23) avec deux entrées, dont la première entrée est fournie avec la tension continue (U) appliquée au moteur à courant continu (9) et dont le signal de sortie (delta U) effectue une influence sur l'excitation (E) du moteur à courant continu (9) par diminution ou amplification du champ, pour ajuster la tension continue (U) appliquée au moteur à courant continu (9), et
e. une unité calculatrice (19), dont le signal de sortie (U*) est amené à la deuxième entrée de la première unité de réglage (23) et dans laquelle la valeur maximum de puissance (MPP) possible au maximum pour l'insolation actuelle et la température actuelle est déterminée par modification itérative dudit signal de sortie (U*), la tension continue (U) appliquée au moteur à courant continu (9) étant ajustable conformément au signal de sortie (U*) de l'unité calculatrice (19).

9. Dispositif photovoltaïque selon la revendication 8, **caractérisé en ce que** sont appliquées à la première entrée de l'unité calculatrice (19) la valeur actuel de la tension continue (U) des modules photovoltaïque et à la deuxiéme entrée de l'unité calculatrice (19) la valeur actuel du courant continu (I) des modules photovoltaïque (5).

10. Dispositif photovoltaïque selon une des revendications 8 et 9, **caractérisé en ce que** la premiére unité de réglage (23) est un controlleur proportional integral (PI).

11. Dispositif photovoltaïque selon une des revendications 8, 9 et 10, **caractérisé en ce que** le moteur à courant continu (9) est un moteur à courant continu (9) à excitation externe, dont le courant d'excitation (E) est influencé par le signal de sortie (ΔU) de la premiére unité de réglage (23).

12. Dispositif photovoltaïque selon la revendication 11, **caractérisé en ce qu'** une deuxiéme unité de réglage (25) est prévue, à la premiére entrée de laquelle le signal de sortie (ΔU) de la premiére unité de réglage (23) est appliqué, et à la deuxiéme entrée de laquelle le signal du courant d'excitation (E) déterminé par un membre de mesure (27) du courant d'excitation est appliqué.

13. Dispositif photovoltaïque selon la revendication 12, **caractérisé en ce que** la deuxiéme unité de réglage (25) est un controlleur proportional integral (PI).

14. Dispositif photovoltaïque selon une des revendications 10, 11 et 12, **caractérisé en ce que** pour fournir le courant d'excitation (E) est prévu un convertisseur (29) qui est alimenté par le réseau d'alimentation en courant (17).

15. Dispositif photovoltaïque selon la revendication 14, **caractérisé en ce que** le convertisseur (29) est contrôlé par le signal de sortie (ΔE) de la deuxiéme unité de réglage (25).

16. Dispositif photovoltaïque selon une des revendications 8 à 15, **caractérisé en ce qu'**il est adapté pour une puissance de plus que 800 kW.

17. Dispositif photovoltaïque selon une des revendications 8 à 16, **caractérisé en ce que** le réseau d'alimentation en courant (17) est un réseau publique dont la résistance intérieure - vue par le générateur de courant alternatif (15) - est constante.

18. Dispositif photovoltaïque selon une des revendications 8 à 17, **caractérisé en ce que** le générateur de courant alternatif (15) est un générateur qui fourni un voltage alternatif (Uw) de 400 V.
